# EUROPEAN PATENT APPLICATION

(11) **EP 4 629 322 A1**
(43) Date of publication of application: **08.10.2025**
(21) Application number: 23898205.2
(22) Date of filing: 23.11.2023
(51) Int. Cl.: H01M 4/134, H01M 4/62, H01M 10/052, H01M 10/0562, H01M 4/02

(54) **NEGATIVE ELECTRODE FOR ALL-SOLID-STATE BATTERY AND ALL-SOLID-STATE BATTERY COMPRISING SAME**

(30) Priority: 29.11.2022 KR 20220163402
(71) Applicant: SAMSUNG SDI CO., LTD., Yongin-si, Gyeonggi-do 17084 (KR)
(72) Inventor: YANG, Jinhoon, Yongin-si, Gyeonggi-do 17084 (KR); LEE, Jungho, Yongin-si, Gyeonggi-do 17084 (KR); SOHN, Juhee, Yongin-si, Gyeonggi-do 17084 (KR); SHIN, Hyuksoo, Yongin-si, Gyeonggi-do 17084 (KR); JUNG, Sungwon, Yongin-si, Gyeonggi-do 17084 (KR)
(74) Representative: Gulde & Partner
(86) International application number: PCT/KR2023/019039
(87) International publication number: WO 2024/117674

(57) **Abstract**

The present invention relates to a negative electrode for an all-solid-state battery and an all-solid-state battery comprising same, and the negative electrode for an all-solid-state battery comprises: a current collector, an ion transport layer, and a negative coating layer positioned between the current collector and the ion transport layer and comprising first amorphous carbon, metal, and a first binder, wherein a thickness ratio of the negative coating layer and the ion transport layer is 1:0.1 to 1:0.5.

## Description

### TECHNICAL FIELD

A negative electrode for an all-solid-state battery and an all-solid-state battery including the same are disclosed.

### BACKGROUND ART

Recently, the rapid supplement of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, research and development to improve the performance of rechargeable lithium batteries is being actively conducted.

An all-solid-state battery among rechargeable lithium batteries refers to a battery in which all materials are solid, and in particular, a battery using a solid electrolyte. One way to increase the energy density of these all-solid-state batteries is to use lithium metal as a negative electrode. However, in this case, there are problems due to lithium volume expansion and irreversible dendrite growth during charge and discharge.

To solve these problems, a method of configuring the negative electrode by forming a layer in which lithium is deposited on the negative electrode current collector during charging and discharging, without using lithium metal itself, is being studied, however, this method is not suitable because it causes low power characteristics and excessive occurrence of short-circuit phenomena.

### DETAILED DESCRIPTION OF THE INVENTION

### TECHNICAL PROBLEM

An embodiment provides a negative electrode for an all-solid-state battery exhibiting excellent electrochemical properties.

Another embodiment provides an all-solid-state battery including the negative electrode.

### TECHNICAL SOLUTION

An embodiment provides a negative electrode for an all-solid-state battery, comprising: a current collector; an ion transport layer; and a negative coating layer located between the current collector and the ion transport layer, and including first amorphous carbon, a metal, and a first binder, wherein a thickness ratio of the negative coating layer and the ion transport layer is 1:0.1 to 1:0.5.

A thickness ratio of the negative coating layer and the ion transport layer may be 1:0.15 to 1:0.5.

A thickness of the ion transport layer may be 0.5 µm to 5 µm.

A thickness of the negative coating layer may be 5 µm to 50 µm.

The ion transport layer may include second amorphous carbon and a second binder.

The second amorphous carbon may have a BET surface area of greater than 10 m²/g and less than 100 m²/g.

The first amorphous carbon may have a BET surface area of greater than 50 m²/g and less than 1500 m²/g.

The specific surface area of the second amorphous carbon may be smaller than the specific surface area of the first amorphous carbon.

An amount of the first binder may be 1 wt% to 15 wt% based on 100 wt% of the total negative coating layer.

An amount of the second binder may be 5 wt% to 50 wt% based on 100 wt% of the total ion transport layer.

The ion transport layer may have a porosity of 5% to 50%.

The negative coating layer may have a porosity of 10% to 30%.

The metal may be Ag, Au, Sn, Zn, Al, Mg, Ge, Cu, In, Ni, Bi, Pt, Pd, or a combination thereof.

The second amorphous carbon may be carbon black, acetylene black, denka black, ketjen black, furnace black, activated carbon, a carbon nanofiber, or a combination thereof.

The second amorphous carbon may be an aggregate having a secondary particle in which primary particles are aggregated.

Another embodiment provides an all-solid-state battery including the negative electrode; the positive electrode; and a solid electrolyte layer between the negative electrode and the positive electrode.

The solid electrolyte may be a sulfide-based solid electrolyte.

### ADVANTAGEOUS EFFECTS

A negative electrode for an all-solid-state battery according to an embodiment may exhibit excellent electrochemical characteristics.

### BRIEF DESCRIPTION OF THE DRAWINGS

FIG. 1 is a schematic view schematically showing the charge/discharge state of an all-solid-state battery according to an embodiment.
FIG. 2 is a schematic view schematically showing the structure of an all-solid-state battery according to an embodiment.
FIG. 3 is a 3D optical microscope image of a cross-section of the negative electrode for an all-solid-state battery manufactured according to Example 1.

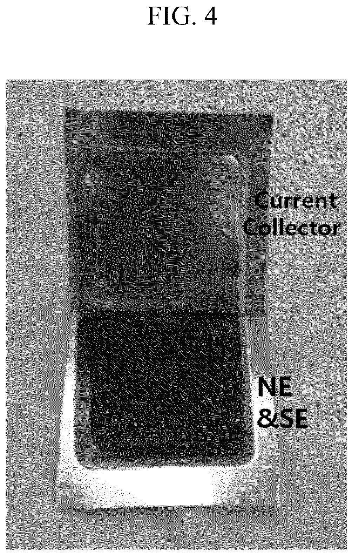

FIG. 4 is a photograph of the disassembled all-solid-state battery cell according to Example 1.

### BEST MODE FOR PERFORMING INVENTION

Hereinafter, embodiments of the present invention will be described in detail. However, these embodiments are merely examples, the present invention is not limited thereto, and the present invention is defined by the scope of claims.

The terminology used herein is used to describe embodiments only, and is not intended to limit the present disclosure. Expressions in the singular include a plurality of expressions unless the context clearly dictates otherwise.

As used herein, "combination thereof" means a mixture, a laminate, a composite, a copolymer, an alloy, a blend, a reaction product, and the like of the constituents.

Here, the term "comprise," "include" or "have" are intended to designate that the performed characteristics, numbers, step, constituted elements, or a combination thereof is present, but it should be understood that the possibility of presence or addition of one or more other characteristics, numbers, steps, constituted element, or a combination do not be precluded in advance.

The drawing shows that the thickness is enlarged in order to clearly show the various layers and regions, and the same reference numerals are given to similar parts throughout the specification. It will be understood that when an element such as a layer, film, region, or substrate is referred to as being "on" another element, it may be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and the like.

Unless otherwise defined in this specification, particle diameter or size may be an average particle diameter. This average particle diameter refers to the average particle diameter (D50), which means the diameter of particles with a cumulative volume of 50 volume% in the particle size distribution. The average particle diameter (D50) may be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range, and from this, the average particle diameter (D50) value may be easily obtained through a calculation.

A negative electrode for an all-solid-state battery according to an embodiment includes a current collector; an ion transport layer; and a negative coating layer between the current collector and the ion transport layer.

In an embodiment, the negative coating layer refers to a layer that helps lithium ions deintercalated from the positive electrode active material move toward the negative electrode during charging and discharging of an all-solid-state battery to facilitate precipitation on the surface of the current collector. That is, a lithium deposition layer is formed between the current collector and the negative coating layer due to precipitation of lithium ions, and the lithium deposition layer serves as a negative electrode active material. This negative electrode is generally referred to as a deposition-type negative electrode. This deposition-type negative electrode does not include a negative electrode active material if assembling the battery, but refers to a negative electrode in which the lithium deposition layer acts as a negative electrode active material.

In an embodiment, the ion transport layer is located on the surface of the negative electrode and comes into contact with the solid electrolyte if configuring an all-solid-state battery, and serves to transport lithium ions well to the negative coating layer.

In an embodiment, the thickness ratio of the negative coating layer and the ion transport layer may be 1:0.1 to 1:0.5, or 1:0.15 to 1:0.5. In this way, if the ion transport layer is included in the negative electrode with a thinner thickness than the negative coating layer and the thickness ratio of the negative coating layer and the ion transport layer is within the above range, the generation of overvoltage, which causes excessive increase in voltage during charge and discharge, may be suppressed, thereby preventing excessive formation of lithium dendrites on the negative electrode surface. Additionally, the reduction in cycle-life due to short-circuit by penetrating this dendrite the electrolyte and contacting it with the positive electrode, may be prevented. In addition, if the thickness ratio is within the above range, the charge/discharge efficiency may be improved.

The thickness of the negative coating layer may be 5 µm to 50 µm, 5 µm to 40 µm, or 5 µm to 30 µm. Additionally, the thickness of the ion transport layer may be 0.5 µm to 5 µm, or 1 µm to 5 µm.

If the thickness ratio of the negative coating layer and the ion transport layer corresponds to the above range, and the thickness of the negative coating layer and the ion transport layer are included in the above range, the effect of including the ion transport layer may be more appropriately obtained.

The negative coating layer includes first amorphous carbon, a metal and a first binder. Additionally, the ion transport layer includes a second amorphous carbon and a second binder. In this way, the ion transport layer does not include metal, and if the ion transport layer includes metal, the metal volume may expand, causing the negative electrode and electrolyte to break, which may result in a short circuit problem.

The first amorphous carbon may be carbon black, acetylene black, denka black, ketjen black, furnace black, activated carbon, a carbon nanofiber, or a combination thereof. An example of the carbon black is Super P (Timcal).

In addition, the second amorphous carbon may be carbon black, acetylene black, denka black, ketjen black, furnace black, activated carbon, a carbon nanofiber, or a combination thereof.

The first amorphous carbon and the second amorphous carbon may be the same or different.

Additionally, the first amorphous carbon or the second amorphous carbon may be a single particle or may be an aggregate having a secondary particle in which primary particles are aggregated. If the first amorphous carbon or the second amorphous carbon is a single particle, it may be an amorphous carbon particle having an average particle diameter of less than or equal to 100 nm, for example, a nanosize of 10 nm to 100 nm.

If the first amorphous carbon is an aggregate, the particle size of the primary particles may be 30 nm to 300 nm, or 35 nm to 100 nm. The particle size of the secondary particles may be 50 nm to 1000 nm, or 100 nm to 500 nm.

If the second amorphous carbon is an assembly, the particle size of the primary particles may be 20 nm to 50 nm, or 20 nm to 35 nm. The particle size of the secondary particles may be 50 nm to 800 nm, or 80 nm to 300 nm.

If the particle size of the primary and secondary particles is within the above range, the first and second amorphous carbons may appropriately maintain a lithium movement path without excessively increasing the lithium movement path length and without interrupting the lithium movement path, thereby enabling smooth conduction of lithium ions. Therefore, lithium precipitation may occur uniformly.

If the first amorphous carbon and the second amorphous carbon are aggregates, the shape of the primary particles may be spherical, elliptical, platelike, and a combination thereof, and in an embodiment, the shape of the primary particles may be spherical, elliptical, and a combination thereof.

In an embodiment, the first amorphous carbon may have a BET surface area of greater than or equal to 50 m²/g and less than or equal to 1500 m²/g, or may have a BET surface area of 50 m²/g to 500 m²/g. If the BET surface area of the first amorphous carbon is within the above range, the negative electrode may have the advantage of having higher cohesion between particles during the manufacture of the negative electrode, thus preventing detachment and increasing stability, and allowing lithium ions to move efficiently, thereby reducing overvoltage.

The second amorphous carbon may have a BET specific surface area of greater than or equal to 10 m²/g and less than or equal to 100 m²/g, and may also have a BET specific surface area of 30 m²/g to 60 m²/g. If the BET surface area of the second amorphous carbon is within the above range, the negative electrode may have the advantage of having higher cohesion between particles during the manufacture of the negative electrode, thus preventing detachment and increasing stability, and allowing lithium ions to move efficiently, thereby reducing overvoltage. In particular, it is desirable that the specific surface area of the second amorphous carbon be smaller than that of the first amorphous carbon. Because the ion transport layer plays a role in rapidly transporting lithium ions, the low surface area of the second amorphous carbon may effectively suppress the generation of overvoltage.

In an embodiment, the first binder included in the negative coating layer or the second binder included in the ion transport layer may be the same or different from each other. Examples of the first binder and the second binder may include a styrene butadiene rubber (SBR), polytetrafluoroethylene, polyvinylidene fluoride, polyethylene, vinylidene fluoride/hexafluoropropylene copolymer, polyacrylonitrile, polymethyl methacrylate, carboxymethyl cellulose, hydroxypropyl cellulose, diacetyl cellulose, or a combination thereof. The carboxymethyl cellulose may be an alkali metal salt thereof, and the alkali metal may be Na or Li. The first and second binders are not limited to these, and any binder used in the relevant technical field may be used.

In an embodiment, the metal included in the negative coating layer may be Ag, Au, Sn, Zn, Al, Mg, Ge, Cu, In, Ni, Bi, Pt, Pd, or a combination thereof. In an embodiment, the metal may be Ag. Because the negative coating layer includes these metals, the electrical conductivity of the negative electrode may be further improved.

The metal may be a nanoparticle, and a size of the metal nanoparticle may be, for example, an average size of 5 nm to 80 nm, but a nanometer size may be suitable. By using the metal nanoparticles having such nano-size, the battery characteristics (e.g., cycle-life characteristics) of the all-solid-state battery may be further improved. If the metal particle size increases to the micrometer level, the uniformity of the metal particles in the negative coating layer decreases, which is not suitable because the current density in a specific area increases and the cycle-life characteristics may deteriorate.

According to an embodiment, in the negative coating layer, an amount of the first binder may be 1 wt% to 15 wt%, 3 wt% to 10 wt%, or 5 wt% to 9 wt% based on 100 wt% of the total negative coating layer. **If** the amount of the first binder is within the above range, there may be an advantage of improving the adhesion between active materials within a range in which the negative electrode resistance does not increase.

Additionally, in the ion transport layer, the amount of the second binder may be 5 wt% to 50 wt%, 8 wt% to 30 wt%, or 10 wt% to 20 wt% based on 100 wt% of the total ion transport layer. If the amount of the second binder is within the above range, there may be an advantage of improving the adhesion between active materials within a range in which the negative electrode resistance does not increase.

In an embodiment, the amount of the first binder included in the negative coating layer may be equal to or less than the amount of the second binder included in the ion transport layer. At this time, the comparison of the amount of the first binder and the amount of the second binder may be made by comparing the weight% values in each layer. For example, the amount of the first binder is an amount value based on 100 wt% of the total negative coating layer, and the amount of the second binder is an amount value based on 100 wt% of the total ion transport layer.

If the amount of the first binder is equal to or smaller than the amount of the second binder, there may be an advantage in that the negative coating layer including the first binder may effectively perform the role of uniform lithium precipitation and the ion transport layer including the second binder may effectively perform the role of lithium ion transport. If the amount of the first binder is higher than that of the second binder, the electrical resistance of the negative coating layer including the first binder becomes relatively higher than that of the ion transport layer, which is not suitable because lithium may be precipitated between the negative coating layer and the ion transport layer or lithium may be precipitated unevenly.

In an embodiment, the amount of the first amorphous carbon included in the negative coating layer may be 60 wt% to 95 wt%, 70 wt% to 95 wt%, 75 wt% to 95 wt%, 80 wt% to 95 wt%, or 85 wt% to 95 wt%, based on 100 wt% of the total negative coating layer. If the amount of the first amorphous carbon is within the above range, it may more appropriately play the role of buffering the phenomenon of volume change occurring if lithium is precipitated, and thus there may be an advantage of helping reversible charge/discharge.

In the negative coating layer according to an embodiment, the amount of the metal may be 3 wt% to 39 wt%, 3 wt% to 30 wt%, 4 wt% to 25 wt%, 5 wt% to 20 wt%, or 5 wt% to 15 wt% based on 100 wt% of the negative coating layer. If the amount of the metal is within the above range, the metal may more effectively form an alloy with lithium, so that the alloy may grow well in the plane direction, and there may be an advantage in that lithium is uniformly precipitated.

The amount of the second amorphous carbon included in the ion transport layer may be 50 wt% to 95 wt%, 70 wt% to 95 wt%, 75 wt% to 95 wt%, 80 wt% to 95 wt%, or 85 wt% to 95 wt%, based on 100 wt% of the total ion transport layer. If the amount of the second amorphous carbon is within the above range, there may be an advantage in that lithium ions may move more quickly without resistance through the second amorphous carbon.

In an embodiment, the ion transport layer may have a porosity of 5% to 50%, or 20% to 40%. If the porosity of the ion transport layer is within the above range, lithium ions may effectively move through the pores.

Additionally, the negative coating layer may have a porosity of 10% to 30%, or 15% to 20%. If the porosity of the negative coating layer is within the above range, the problem of lithium growing between pores may be more effectively suppressed, lithium may move well through the pores, so that resistance may be further reduced, and thus lithium electrodeposition may be effectively induced, which is suitable.

The negative coating layer may further include an additive such as a filler, a dispersant, and an ion conductive material. As the filler, dispersant, ion conductive material, etc. that may be included in the negative coating layer, known materials generally used in all-solid-state batteries may be used.

According to an embodiment, the negative electrode may further include a lithium-containing layer between the current collector and the negative coating layer.

Because the lithium-containing layer is a metal layer including lithium, it may act as, for example, a lithium reservoir and may be called a lithium deposition layer.

A thickness of the lithium-containing layer may be 1 µm to 1000 µm, 1 µm to 500 µm, 1 µm to 200 µm, 1 µm to 150 µm, 1 µm to 100 µm, or 1 µm to 50 µm. **If** the thickness of the lithium-containing layer is within the above range, it may properly function as a lithium reservoir and may further improve its cycle-life.

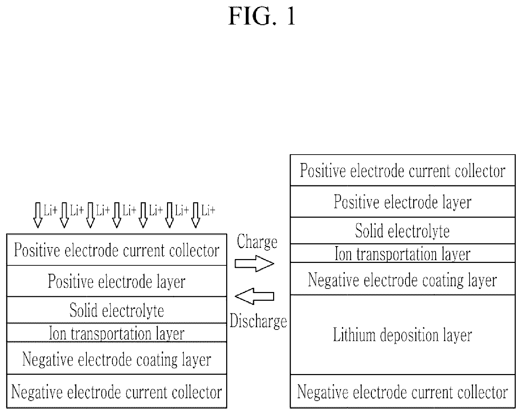

As shown in FIG. 1, such a lithium-containing layer may be formed if, after fabricating an all-solid-state battery, lithium ions are deintercalated from the positive electrode active material during charging, pass through the solid electrolyte, and move toward the negative electrode, resulting in lithium being precipitated and deposited on the negative electrode current collector. In FIG. 1, the lithium-containing layer is represented as a lithium deposition layer.

The charging process may be a formation process performed 1 time to 3 times at 0.05 C to 1 C at about 25 °C to 50 °C. Because lithium included in the lithium-containing layer is ionized and moves toward the positive electrode during discharge, this lithium may be used as a negative electrode active material.

In an embodiment, because the lithium-containing layer is present between the current collector and the negative coating layer, the negative coating layer may serve as a protective layer for the lithium-containing layer, thereby suppressing the precipitation growth of lithium dendrites. As a result, short circuiting and capacity reduction of the all-solid-state battery may be suppressed, and as a result, the cycle-life of the all-solid-state battery may be improved.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet. A thickness of the negative electrode current collector may be 1 µm to 20 µm, 5 µm to 15 µm, or 7 µm to 10 µm.

The current collector may include a metal substrate and may further include a thin film formed on the substrate. The thin film may include an element that may form an alloy with lithium, and may be, for example, gold, silver, zinc, tin, indium, silicon, aluminum, bismuth, or a combination thereof, but is not limited thereto, and in the technical field, any element that may form an alloy with lithium may be used. If the current collector further includes the thin film and the lithium-containing layer is formed by precipitating during charging, a more flattened lithium-containing layer may be formed, thereby further improving the cycle-life of the all-solid-state battery.

A thickness of the thin film may be 1 nm to 800 nm, 10 nm to 700 nm, 50 nm to 600 nm, or 100 nm to 500 nm. If the film thickness is within the above range, the cycle-life characteristics may be further improved.

Another embodiment provides an all-solid-state battery including the negative electrode, a positive electrode, and a solid electrolyte layer between the negative electrode and the positive electrode.

The solid electrolyte layer may include a solid electrolyte. The solid electrolyte in the solid electrolyte layer may be an inorganic solid electrolyte such as a sulfide-based solid electrolyte, an oxide-based solid electrolyte, or a halide-based solid electrolyte, or a solid polymer electrolyte. The solid electrolyte may be a sulfide-based solid electrolyte.

The sulfide-based solid electrolyte and the oxide-based solid electrolyte are as described above, and may be the same as or different from the solid electrolyte included in the positive electrode or the negative electrode.

The solid polymer electrolyte may include, for example, one or more selected from polyethylene oxide, poly(diallyldimethylammonium) trifluoromethanesulfonylimide (poly(diallyldimethylammonium)TFSI), CusN, Li₃N, LiPON, Li₃PO₄ · Li₂S · SiS₂, Li₂S · GeS₂ · Ga₂S₃, Li₂O · 11Al₂O₃, Na₂O · 11Al₂O₃, (Na,Li)₁₊ₓTi₂₋ₓAlₓ(PO₄)₃ (0.1 ≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-silicates, Li_{0.3}La_{0.5}TiO₃, Na₅MSi₄O₁₂ (wherein M is a rare earth element of Nd, Gd, Dy, and the like), Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (x≤0.8, 0≤y≤1.0, and M is Nd, Sm, Eu, Gd, Tb, Dy, Ho, Er, Tm, or Yb), Li_{1+x+y}QₓTi₂₋ₓSi_{y}P_{3-y}O₁₂ (0<x≤0.4, 0<y≤0.6, and Q is Al or Ga), Li₆BaLa₂Ta₂O₁₂, Li₇La₃Zr₂O₁₂, Li₅La₃Nb₂O₁₂, Li₅La₃M₂O₁₂ (M is Nb or Ta), and Li₇₊ₓAₓLa₃₋ₓZr₂O₁₂ (0<x<3, and A is Zn).

The halide-based solid electrolyte may include a Li element, an M element (M is a metal other than Li), and an X element (X is a halogen). Examples of X may include F, Cl, Br, and I. In particular, in the halide-based solid electrolyte, at least one of Br and Cl is suitable as the above X. In addition, examples of M may include metal elements such as Sc, Y, B, Al, Ga, and In.

A composition of the halide-based solid electrolyte is not particularly limited, but may be represented by Li₆₋₃ₐMₐBr_{b}Cl_{c} (where M is a metal other than Li, 0<a<2, 0≤b≤6, 0≤c≤6, and b+c=6). At this time, a may be 0.75 or more, 1 or more, and a may be 1.5 or less. The b may be 1 or more, and may be 2 or more. Additionally, c may be 3 or more, and may be 4 or more. Specific examples of the halide-based solid electrolyte may be Li₃YBr₆, Li₃YCl₆, or Li₃YBr₂Cl₄.

The electrolyte layer may further include a binder. At this time, the binder may be a styrene butadiene rubber, a nitrile butadiene rubber, polytetrafluoroethylene, polyvinylidene fluoride, polyethylene, an acrylate-based polymer, or a combination, but is not limited thereto, and anything used as a binder in the art may be used. The acrylate-based polymer may be butyl acrylate, polyacrylate, polymethacrylate, or a combination thereof.

A thickness of the electrolyte layer may be, for example, 1 µm to 150 µm.

The solid electrolyte layer may further include an alkali metal salt, an ionic liquid, or a combination thereof.

The alkali metal salt may be, for example, a lithium salt. An amount of the lithium salt in the solid electrolyte layer may be greater than or equal to 1 M, for example, 1 M to 4 M. In this case, the lithium salt may improve ionic conductivity by improving lithium ion mobility of the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, Lil, LiB(C₂O₄)₂, LiBF₄, LiBF₃(C₂F₅), lithium bis(oxalato) borate (LiBOB), lithium oxalyldifluoroborate (LIODFB), lithium difluoro(oxalato) borate (LiDFOB), lithium bis(trifluoromethanesulfonyl)imide (LiTFSI, LiN(SO₂CF₃)₂), lithium bis(fluorosulfonyl)imide, LiFSI, LiN (SO₂F)₂), LiCF₃SO₃, LiAsF₆, LiSbF₆, LiClO₄, or a mixture thereof.

In addition, the lithium salt may be an imide-based salt, for example, the imide-based lithium salt may be lithium bis(trifluoromethane sulfonyl) imide (LiTFSI, LiN(SO₂CF₃)₂), and lithium bis(fluorosulfonyl)imide (LiFSI, LiN(SO₂F)₂). The lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

The ionic liquid may be, for example, one or more selected from N-methyl-N-propylpyrrolidinium bis(trifluoromethanesulfonyl)imide N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90:10, 40:60 to 90:10, or 50:50 to 90:10.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. A forming process of the solid electrolyte layer is well known in the art, and thus a detailed description thereof will be omitted.

The positive electrode includes a positive electrode current collector and a positive electrode layer on one surface of the positive electrode current collector.

The positive electrode layer may include a positive electrode active material. The positive electrode active material may be a positive electrode active material capable of reversibly intercalating and deintercalating lithium ions and for example, the positive electrode active material may be, for example, at least one of a composite oxide of lithium and a metal selected from cobalt, manganese, nickel, and a combination thereof. Examples of the positive electrode active material may include LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90 ≤ a ≤ 1.8, 0≤b≤0.5, 0≤c≤0.5, 0<α≤ 2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, O<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0 ≤ c ≤ 0.5, 0 < α < 2); LiₐNi_{1-b-c}Mn_{b}B¹_{c}O_{2-α}F¹₂ (0.90 ≤ a ≤ 1.8, 0≤b≤0.5, 0≤c≤0.5, 0 < α < 2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GeO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the above chemical formulas, A is Ni, Co, Mn, or a combination thereof; B¹ is Al, Ni, Co, Mn, Cr, Fe, Mg, Sr, V, a rare earth element, or a combination thereof; D¹ is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; J is V, Cr, Mn, Co, Ni, Cu, or a combination thereof; and L¹ is Mn, Al, or a combination thereof.

According to an embodiment, the positive electrode active material may be a ternary lithium transition metal such as LiNiₓCo_{y}Al_{z}O₂ (NCA), LiNiₓCo_{y}Mn_{z}O₂ (NCM) (wherein 0<x<1, 0<y<1, 0<z<1, x+y+z=1).

Also, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail because it is well-known in the related field.

In addition, as the coating layer, any known coating layer for the positive electrode active material of an all-solid-state battery may be applied, examples of which include Li₂O-ZrO₂ (LZO).

In addition, if the positive electrode active material includes nickel, cobalt and manganese, or nickel, cobalt and aluminum, the capacity density of the all-solid-state battery may be further improved and metal elution from the positive electrode active material in the charged state may be further reduced. Because of this, the long-term reliability and cycle characteristics of the all-solid-state battery may be further improved in a charged state.

Here, examples of the shape of the positive electrode active material include particle shapes such as spheres and ellipsoids-spheres. Additionally, the average particle diameter of the positive electrode active material is not particularly limited, and may be within a range applicable to the positive electrode active material of existing all-solid-state rechargeable batteries. Additionally, the amount of the positive electrode active material in the positive electrode layer is not particularly limited, and may be within a range applicable to the positive electrode layer of an existing all-solid-state rechargeable batteries.

In the positive electrode layer, an amount of the positive electrode active material may be 69.8 wt% to 89.8 wt% based on the total weight of the positive electrode layer.

The positive electrode layer may additionally include a solid electrolyte. The solid electrolyte included in the positive electrode layer may be the aforementioned solid electrolyte, and in this case, it may be the same as or different from the solid electrolyte included in the solid electrolyte layer. The solid electrolyte may be included in an amount of 10 wt% to 30 wt% based on a total weight of the positive electrode layer.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet.

The positive electrode layer may further include a binder and may further include a conductive material.

The binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The binder may be included in an amount of 0.1 wt% to 5 wt%, or 0.1 wt% to 3 wt%, based on a total weight of each component of the positive electrode for the all-solid-state battery, or based on a total weight of the positive electrode active material layer. Within the above amount range, the binder may sufficiently exhibit adhesive ability without deteriorating battery performance.

The conductive material is used to impart conductivity to the electrode, and any material that does not cause chemical change and conducts electrons may be used in the battery, and examples thereof may include a carbon-based material such as natural graphite, artificial graphite, carbon black, acetylene black, ketjen black, a carbon fiber, a carbon nanotube, and the like, a metal-based material including copper, nickel, aluminum, silver, etc. and in the form of a metal powder or a metal fiber, a conductive polymer such as a polyphenylene derivative, or a mixture thereof.

The conductive material may be included in an amount of 0.1 wt% to 5 wt%, or 0.1 wt% to 3 wt%, based on a total weight of each component of the positive electrode for the all-solid-state battery, or based on a total weight of the positive electrode active material layer. Within the above amount range, the conductive material may improve electrical conductivity without deteriorating battery performance.

A thickness of the positive electrode layer may be 90 µm to 200 µm. For example, the thickness of the positive electrode layer may be greater than or equal to 90 µm, greater than or equal to 100 µm, greater than or equal to 110 µm, greater than or equal to 120 µm, greater than or equal to 130 µm, greater than or equal to 140 µm, greater than or equal to 150 µm, greater than or equal to 160 µm, greater than or equal to 170 µm, greater than or equal to 180 µm, or greater than or equal to 190 µm, and less than or equal to 200 µm, less than or equal to 190 µm, less than or equal to 180 µm, less than or equal to 170 µm, less than or equal to 160 µm, less than or equal to 150 µm, less than or equal to 140 µm, less than or equal to 130 µm, less than or equal to 120 µm, or less than or equal to 110 µm. As described above, because the thickness of the positive electrode layer is thicker than the total thickness of the negative coating layer and the ion transport layer, the capacity of the positive electrode is greater than that of the negative electrode.

The positive electrode may be manufactured by forming a positive electrode layer on a positive electrode current collector by dry or wet coating.

In an embodiment, a cushioning material may be additionally included to buffer thickness changes that occur if the all-solid-state battery is charged and discharged. The cushioning material may be present between the negative electrode and the case, and in the case of a battery in which one or more electrode assemblies are stacked, it may be present between different electrode assemblies.

The cushioning material may include a material having an elastic recovery rate of 50% or more and an insulating function, and specifically, may include a silicone rubber, an acrylic rubber, a fluorine rubber, nylon, a synthetic rubber, or a combination thereof. The cushioning material may exist in the form of a polymer sheet.

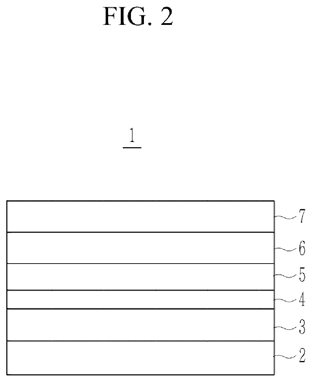

FIG. 2 schematically illustrates an all-solid-state battery according to an embodiment, wherein the all-solid-state rechargeable battery 1 includes a positive electrode including a positive electrode current collector 7 and a positive electrode layer 6, a negative electrode including a negative electrode current collector 2, a negative coating layer 3, and an ion transport layer 4, and a solid electrolyte layer 5 between the positive electrode layer 6 and the ion transport layer 4. In FIG. 2, the negative electrode 20 is presented in a configuration that does not include a lithium-containing layer, however, as explained above, it is of course possible to include a lithium-containing layer formed between the negative electrode current collector 2 and the negative coating layer 3 during charge and discharge.

An all-solid-state battery according to an embodiment may be fabricated by placing a negative electrode, a positive electrode, and a solid electrolyte layer between the negative electrode and the positive electrode, preparing a stack, and pressing the stack.

The pressing process may be performed in the range of 25 °C to 90 °C. Additionally, the pressing process may be performed by pressing at a pressure of less than or equal to 550 MPa, for example less than or equal to 500 MPa, for example 1 MPa to 500 MPa. The pressing time may vary depending on temperature and pressure, and may be, for example, less than 30 minutes. The pressing process may be, for example, an isostatic press, a roll press, a plate press, or a warm isostatic press.

### [Mode for Invention]

Hereinafter, examples of the present invention and comparative examples are described. These examples, however, are not in any sense to be interpreted as limiting the scope of the invention.

### < BET Evaluation >

The BET specific surface area of carbon black used in the following experiments was measured using the following method.

A mixture of nitrogen and helium gas (1:1 volume ratio) was injected onto the carbon black surface and injected into a U-shaped sample cell. At this time, the adsorption of nitrogen gas was detected using a thermal conductivity detector, and the amount of adsorbed gas was measured as the specific surface area.

### (Example 1)

### (1) Manufacturing of Negative Electrode

A negative coating layer slurry was prepared by mixing 86 wt% of carbon black of secondary particles (a BET specific surface area: 150 m²/g, an average particle diameter (D50): 400 nm), in which primary particles with an average particle diameter (D50) of 35 nm were aggregated, 5 wt% of Ag with an average size of 60 nm, 3 wt% of carboxylmethyl cellulose, and 6 wt% of a styrene-butadiene rubber in water.

An ion transport layer slurry was prepared by mixing 75 wt% of carbon black of secondary particles (a BET specific surface area: 55 m²/g, an average particle diameter (D50): 200 nm), in which primary particles with an average particle diameter (D50) of 35 nm were aggregated, 8 wt% of carboxymethyl cellulose, and 17 wt% of a styrene-butadiene rubber in water.

The negative coating layer slurry was coated on a 10 µm-thick stainless steel foil current collector and then, dried to form a dry layer, and the ion transport layer slurry was coated on the dry layer and then, vacuum-dried at 80 °C to manufacture a negative electrode having a 15 µm-thick negative coating layer and a 3 µm-thick ion transport layer. The manufactured negative coating layer had porosity of 20%, and the ion transport layer had porosity of 30%.

### (2) Manufacturing of Solid Electrolyte Layer

An isobutyryl isobutyrate binder solution (a solid content: 50 wt%) prepared by adding an acrylate-based polymer of butyl acrylate, was added to an argyrodite-type solid electrolyte of Li₆PS₅Cl, and then, mixed. Here, the solid electrolyte and the binder were mixed in a weight ratio of 98.7: 1.3.

The mixing process was performed by using a Thinky mixer. Subsequently, 2 mm zirconia balls were added to the obtained mixture and then, stirred again by using a Thinky mixer to prepare slurry. The slurry was cast on a polytetrafluoroethylene release film and then, dried at room temperature to manufacture a 100 µm-thick solid electrolyte layer.

### (3) Fabricating of All-solid-state Half-cell

The manufactured negative electrode, solid electrolyte, and lithium metal counter electrode were sequentially stacked, and a pressure of 8 MPa was applied to manufacture a solid half-cell (torque half-cell).

### (4) Fabricating of All-solid-state Full-cell

85.0 wt% of a positive electrode active material of LiNi_{0.8}Co_{0.1}Al_{0.1}O₂, 13.0 wt% of an argyrodite-type solid electrolyte of Li₆PS₅Cl, 0.5 wt% of a conductive material of carbon nanotube, and 1.5 wt% of a binder of polyvinylidene fluoride were mixed in a solvent of N-methyl pyrrolidone to prepare a positive electrode layer slurry.

The positive electrode layer slurry was coated on an aluminum current collector and then, dried at 60 °C and compressed to manufacture a positive electrode for an all-solid-state battery cell.

The negative electrode, the solid electrolyte, and the positive electrode were sequentially stacked and then, subjected to a warm isostatic pressure (WIP) at 8 MPa to fabricate an all-solid-state full-cell.

### (Example 2)

A negative electrode, an all-solid-state half-cell, and an all-solid-state full-cell were manufactured in the same manner as in Example 1 except that the negative electrode was manufactured to have a 20 µm-thick negative coating layer and a 2 µm-thick ion transport layer by using the negative coating layer slurry and the ion transport layer slurry according to Example 1. In the manufactured negative electrode, the negative coating layer had porosity of 23%, and the ion transport layer had porosity of 28%.

### (Example 3)

A negative electrode, an all-solid-state half-cell, and an all-solid-state full-cell were manufactured in the same manner as in Example 1 except that the negative electrode was manufactured to have a 11 µm-thick negative coating layer and a 4 µm-thick ion transport layer by using the negative coating layer slurry and the ion transport layer slurry according to Example 1. In the manufactured negative electrode, the negative coating layer had porosity of 16%, and the ion transport layer had porosity of 35%.

### (Example 4)

A negative electrode, an all-solid-state half-cell, and an all-solid-state full-cell were manufactured in the same manner as in Example 1 except that the negative electrode was manufactured to have a 7 µm-thick negative coating layer and a 3 µm-thick ion transport layer by using the negative coating layer slurry and the ion transport layer slurry according to Example 1. In the manufactured negative electrode, the negative coating layer had porosity of 14%, and the ion transport layer had porosity of 30%.

### (Example 5)

A negative electrode, an all-solid-state half-cell, and an all-solid-state full-cell were manufactured in the same manner as in Example 1 except that the negative electrode was manufactured to have a 6 µm-thick negative coating layer and a 3 µm-thick ion transport layer by using the negative coating layer slurry and the ion transport layer slurry according to Example 1. In the manufactured negative electrode, the negative coating layer had porosity of 13%, and the ion transport layer had porosity of 30%.

### (Comparative Example 1)

A negative electrode, an all-solid-state half-cell, and an all-solid-state full-cell were manufactured in the same manner as in Example 1 except that the negative electrode was manufactured to have a 30 µm-thick negative coating layer and a 2.5 µm-thick ion transport layer by using the negative coating layer slurry and the ion transport layer slurry according to Example 1. In the manufactured negative electrode, the negative coating layer had porosity of 35%, and the ion transport layer had porosity of 29%.

### (Comparative Example 2)

A negative electrode, an all-solid-state half-cell, and an all-solid-state full-cell were manufactured in the same manner as in Example 1 except that the negative electrode was manufactured to have a 15 µm-thick negative coating layer and a 9 µm-thick ion transport layer by using the negative coating layer slurry and the ion transport layer slurry according to Example 1. In the manufactured negative electrode, the negative coating layer had porosity of 20%, and the ion transport layer had porosity of 43%.

### (Comparative Example 3)

A negative electrode, an all-solid-state half-cell, and an all-solid-state full-cell were manufactured in the same manner as in Example 1 except that the negative electrode was manufactured to have a 9 µm-thick negative coating layer and a 5 µm-thick ion transport layer by using the negative coating layer slurry and the ion transport layer slurry according to Example 1. In the manufactured negative electrode, the negative coating layer had porosity of 15%, and the ion transport layer had porosity of 36%.

### (Comparative Example 4)

A negative electrode, an all-solid-state half-cell, and an all-solid-state full-cell were manufactured in the same manner as in Example 1 except that the negative electrode was manufactured to have a 8 µm-thick negative coating layer and a 10 µm-thick ion transport layer by using the negative coating layer slurry and the ion transport layer slurry according to Example 1. In the manufactured negative electrode, the negative coating layer had porosity of 15%, and the ion transport layer had porosity of 40%.

### Experimental Example 1) 3D Optical Photograph (3D Optical microscope; OM) Measurement

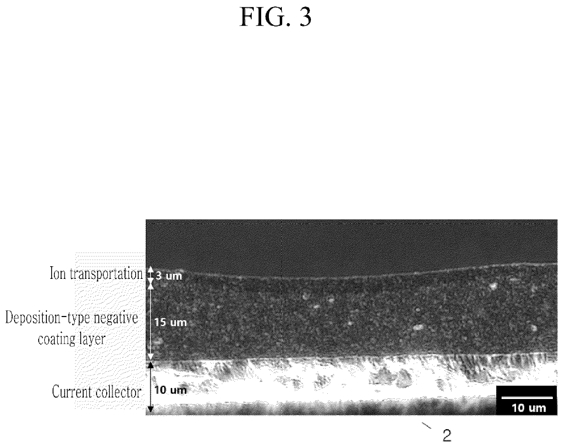

After cross-polishing (CP) a cross-section of the negative electrode of Example 1, a 2000x photograph was taken of the cross-section with 3D OM (Keyence Corp.), and the result is shown in FIG. 3. As shown in FIG. 3, the negative electrode of Example 1 was confirmed to have the negative coating layer (expressed as a deposition-type negative electrode layer in FIG. 3) and the ion transport layer sequentially formed on the current collector.

### Experimental Example 2) Overvoltage Evaluation

The all-solid-state half-cells according to Examples 1 to 5 and Comparative Examples 1 to 4 were respectively once charged at 0.05 C. The cells were measured with respect to a voltage, which started to drop at OCV (open circuit voltage, about 2.5 V) up to a point where an inflection point occurred voltage at about 0 mV. The measured results are shown as initial overvoltage in Table 1.

### Experimental Example 3) Evaluation of Charge/Discharge Efficiency

The all-solid-state half-cells according to Examples 1 to 5 and Comparative Examples 1 to 4 were once charged and discharged at 0.05 C. A ratio of discharge capacity to charge capacity (1st discharge capacity/1st charge capacity) was calculated, and the results are shown as initial efficiency in Table 1.

### Experimental Example 4) Cycle-Life Evaluation

The all-solid-state full-cells of Examples 1 to 5 and Comparative Examples 1 to 4 were 100 times charged and discharged at 0.33 C. A ratio of 100th discharge capacity to 1st discharge capacity was obtained. From this value, the results were classified according to the following criteria and then, shown in Table 1.
X: < 90% [(100th discharge capacity/1st discharge capacity)*100]
○ : 90% [(100th discharge capacity/1st discharge capacity)*100]

**(Table 1)**

| | Thickness ratio of negative coating layer: ion transport layer | Thickness of negative coating layer (µm) | Thickness of ion transport layer (µm) | Half-cell | | Full-cell |
|---|---|---|---|---|---|---|
| | | | | Overvoltage (mV) | Charge/ discharge efficiency (%) | Cycle-life evaluation |
| Example 1 | 1:0.20 | 15 | 3 | 12 | 86.2 | ○ |
| Example 2 | 1:0.10 | 20 | 2 | 15 | 85.2 | ○ |
| Example 3 | 1:0.36 | 11 | 4 | 14 | 87.8 | ○ |
| Example 4 | 1:0.43 | 7 | 3 | 13 | 87.6 | ○ |
| Example 5 | 1:0.5 | 6 | 3 | 11 | 87.8 | ○ |
| Comparative Example 1 | 1:0.08 | 30 | 2.52.6 | 15 | 71.7 | X |
| Comparative Example 2 | 1:0.60 | 15 | 9 | 19 (NG) | 77.8 | X |
| Comparative Example 3 | 1:0.55 | 9 | 5 | 14 | 79.8 | X |
| Comparative Example 4 | 1:1.25 | 8 | 10 | 18 (NG) | 78.3 | X |

As shown in Table 1, Examples 1 to 5 having a thickness ratio of the negative coating layer and the ion transport layer within a range of 1:0.1 to 1:0.5 exhibited a low overvoltage, excellent charge and discharge efficiency, and excellent cycle-life characteristics.

On the contrary, Comparative Examples 1 to 8 having a thickness ratio of the negative coating layer and the ion transport layer out of the range of 1:0.1 to 1:0.5 exhibited too high overvoltage, very low charge/discharge efficiency, or deteriorated cycle-life characteristics.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A negative electrode for an all-solid-state battery, comprising
a current collector;
an ion transport layer; and
a negative coating layer located between the current collector and the ion transport layer, and including a first amorphous carbon, a metal, and a first binder,
wherein a thickness ratio of the negative coating layer and the ion transport layer of 1:0.1 to 1:0.5.

2. The negative electrode for an all-solid-state battery as claimed in claim 1, wherein a thickness ratio of the negative coating layer and the ion transport layer is 1:0.15 to 1:0.5.

3. The negative electrode for an all-solid-state battery as claimed in claim 1, wherein a thickness of the ion transport layer is 0.5 µm to 5 µm.

4. The negative electrode for an all-solid-state battery as claimed in claim 1, wherein a thickness of the negative coating layer is 5 µm to 50 µm.

5. The negative electrode for an all-solid-state battery as claimed in claim 1, wherein the ion transport layer includes second amorphous carbon and a second binder.

6. The negative electrode for an all-solid-state battery as claimed in claim 5, wherein the second amorphous carbon has a BET surface area of greater than 10 m²/g and less than 100 m²/g.

7. The negative electrode for an all-solid-state battery as claimed in claim 1, wherein the first amorphous carbon has a BET surface area of greater than 50 m²/g and less than 1500 m²/g.

8. The negative electrode for an all-solid-state battery as claimed in claim 1, wherein the ion transport layer includes a second amorphous carbon and a second binder, and
a specific surface area of the second amorphous carbon is smaller than a specific surface area of the first amorphous carbon.

9. The negative electrode for an all-solid-state battery as claimed in claim 1, wherein an amount of the first binder is 1 wt% to 15 wt% based on 100 wt% of the total negative coating layer.

10. The negative electrode for an all-solid-state battery as claimed in claim 5, wherein an amount of the second binder is 5 wt% to 50 wt% based on 100 wt% of the total ion transport layer.

11. The negative electrode for an all-solid-state battery as claimed in claim 1, wherein the ion transport layer has a porosity of 5% to 50%.

12. The negative electrode for an all-solid-state battery as claimed in claim 1, wherein the negative coating layer a porosity of 10% to 30%.

13. The negative electrode for an all-solid-state battery as claimed in claim 1, wherein the metal includes Ag, Au, Sn, Zn, Al, Mg, Ge, Cu, In, Ni, Bi, Pt, Pd, or a combination thereof.

14. The negative electrode for an all-solid-state battery as claimed in claim 5, wherein the second amorphous carbon includes carbon black, acetylene black, denka black, ketjen black, furnace black, activated carbon, a carbon nanofiber, or a combination thereof.

15. The negative electrode for an all-solid-state battery as claimed in claim 5, wherein the second amorphous carbon is an assembly having a secondary particle form in which primary particles are assembled.

16. An all-solid-state battery, comprising
the negative electrode as claimed in any one of claim 1 to claim 15;
a positive electrode; and
a solid electrolyte layer between the negative electrode and the positive electrode.

17. The all-solid-state battery as claimed in claim 16, wherein the solid electrolyte is a sulfide-based solid electrolyte.
